# EUROPEAN PATENT SPECIFICATION

(11) **EP 3 162 217 B1**
(45) Date of publication and mention of the grant of the patent: **02.12.2026**
(21) Application number: 16195823.6
(22) Date of filing: 26.10.2016
(51) Int. Cl.: A22C 21/06

(54) **EVISCERATION APPARATUS AND A METHOD FOR EVISCERATING SUSPENDED POULTRY**
AUSWEIDUNGSVORRICHTUNG UND VERFAHREN ZUM AUSWEIDEN VON AUFGEHÄNGTEM GEFLÜGEL
PROCÉDÉ ET APPAREIL D'ÉVISCÉRATION DE VOLAILLES SUSPENDUES

(30) Priority: 29.10.2015 NL 2015691
(43) Date of publication of application: 03.05.2017
(73) Proprietor: Meyn Food Processing Technology B.V., 1511 MA Oostzaan (NL)
(72) Inventor: Kikstra, Evert, 1511 MA Oostzaan (NL); Zomerdijk, Hermanus Laurentius, 1511 MA Oostzaan (NL)
(74) Representative: van Breda, Jacobus

(56) References cited:
- EP-A1- 0 497 014
- EP-A1- 0 839 455
- EP-A1- 1 742 537
- EP-B1- 1 742 537
- WO-A1-01/52658
- US-A- 4 435 878
- US-A- 4 516 290

## Description

The invention relates to a method for eviscerating a poultry carcass and relates to an evisceration apparatus for eviscerating such a poultry carcass suspended by the legs, wherein the apparatus comprises an evisceration tool which is movable up and down, and into and out of a body cavity of the poultry, and wherein the evisceration tool comprises two bracket halves that connect to each other with a hinge.

EP-A- 0 839 455 discloses such a device for removing the viscera from the carcass of a slaughtered bird, comprising means for holding the carcass with its vent upward, means for gripping the gullet, said gripping means comprising at least two jaw members which are movable towards each other to fixedly and positively clamp the gullet between them. The device also applies a shield plate next to the jaw members to enhance the penetration of the evisceration tool into the body cavity of the bird without tissue entering too soon between the jaw members.

US 4,435,878 discloses a poultry evisceration tool, including a chef and a look member mounted on the shaft, the loop being vertically elongated and being formed of two symmetrical interconnected halves which lie on opposite sides of a central plane. The two halves of the evisceration tool are immovable.

US 4,516,290 discloses an apparatus for removing the entrails of slaughtered birds which document teaches that during the drawing of the entrails the bird must be positioned exactly. For this purpose a concave support plate for the breast of the bird is applied which has at its bottom end two projecting support lips cooperating with two U-shaped bows which are situated above them and are adapted to move towards and away from the plate. It is further disclosed in this document to apply a hook engaging around the neck of the bird.

EP-A- 0 497 014 discloses a method for eviscerating a poultry carcass and relates to an evisceration apparatus for eviscerating such a poultry carcass suspended by the legs, wherein the apparatus comprises an evisceration tool which is movable up and down, and into and out of a body cavity of the poultry, and wherein the evisceration tool comprises two bracket halves that connect to each other with a hinge at a lower extremity of the tool, wherein said two bracket halves are embodied with cooperating clamping faces adjacent to and above said hinge for clamping a part of the viscera of the poultry when the two bracket halves are moved towards each other from an open position into a closed position.

In the method that is known from EP-A- 0 497 014 said evisceration tool is introduced in its open position into the body cavity of the poultry until it reaches a lowermost position in the body cavity of the poultry; where-after the two bracket halves are moved towards each other from the open position into a closed position therewith breaking tissue connections of the viscera with the remainder of the poultry carcass so that eventually a part of the viscera of the poultry, notably the gullet, is clamped. After that the two bracket halves are moved in their closed position out of the body cavity of the poultry carcass together with the clamped viscera.

It is an object of the invention to improve the known method and apparatus and realise advantages in comparison with the prior art that will become apparent from the following disclosure.

A first aspect of the invention relates to the feature that the evisceration tool further comprises a support bracket positioned next to the two bracket halves, which support bracket is movable up and down, and into and out of the body cavity of the poultry simultaneously and synchronously with the two bracket halves. Accordingly during the process of evisceration said support bracket is moved up and down, and into and out of the body cavity of the poultry simultaneously and synchronously with the movement of the two bracket halves. This feature is particularly helpful in preventing that any part of the viscera package will tip over during or after removal of the viscera package from the body cavity of the poultry in a direction that would result in that tissue of the viscera package will cover the hinge of the tool. When this tipping over in an undesired direction is not prevented the tissue may in the process of evisceration eventually cover the hinge at the lower extremity of the tool, and it will then not be possible for a viscera conveyor to take over the viscera package from its most favourable position. This applies in particular when the evisceration tool is mounted on a carousel machine; it will then not be possible to take over the viscera package in a single action. The additional handling that is then required is detrimental to the automation of this process.

It is remarked that WO01/52658 teaches in a particular embodiment shown in its figures 9 - 11 the application of two substantially U-shaped strips which can pivot with respect to one another and are coupled via a double pivot at their front end. These U-shaped strips are used as scraping member to separate abdominal fat from abdominal skin of poultry and have as such nothing to do with the subject of the invention to remove an entrails package from a body cavity of a bird suspended by the legs. It is further remarked that the two substantially U-shaped strips form a scraping member that cooperates with a support in the form of a flat plate, and that said scraping member is for that purpose moved upwards along the support for the purpose of scraping the abdominal fat off the abdominal skin. The scraping member and the flat plate do therefore not carry out a simultaneous and synchronous movement into or out of the poultry body cavity as the invention prescribes.

According to the invention it is preferred that the apparatus is arranged to cooperate with a transport shackle for an entrails package eviscerated from said body cavity of the poultry, wherein the support bracket is positioned between said transport shackle and the two bracket halves. This feature means that the viscera package can be taken over by the transport shackle in a single action when this transport shackle is in a position moving close to the periphery of the earlier mentioned carousel machine on which the evisceration tool is usually mounted. Suitably then the transport shackle can be equipped with jaws for clamping a part of the viscera or entrails package.

A further aspect of the invention relates to the feature that the apparatus further comprises a neck clamp for clamping a neck of the suspended poultry during movement of the two bracket halves out of the body cavity of the poultry while clamping a part of the viscera of the poultry. In the prior art the viscera package is simply pulled out of the body cavity while the poultry carcass is suspended by the legs and retained in position by the force of gravity. Gravity is however not always enough as a counterforce and the action of removing the two brackets with the clamped viscera package out of the body cavity may consequently result in tilting of the poultry carcass during evisceration. This may result in that the viscera package, and in particular the liver may get damaged through contact with the body cavity and the tilted hole through which the evisceration tool is moved out of the carcass body. With the neck clamp the orientation of the poultry carcass is secured, and removal of the viscera package can be realized without risk of damaging the entrails. This also prevents rejections of the processed packages and corresponding poultry carcasses.

Another aspect of the invention relates to the feature that the two bracket halves have curvatures that are arranged such that a window is present immediately adjacent to the clamping faces when the two bracket halves are in the closed position, whereas said window immediately adjacent to the clamping faces is substantially closed when the two bracket halves are in the open position. This window enables that the larger parts of the viscera package, such as the gizzard and liver, can tip over through said window in a direction away from the supporting bracket so that after the tipping over is completed no tissue will cover the hinge of the two bracket halves. When the concerning organs are too large to pass through this window, the earlier mentioned support bracket prevents that tipping over of the package takes place in the wrong direction, which would result in covering of the hinge of the two bracket halves.

The invention will hereinafter be further elucidated with reference to the drawing of an exemplary embodiment of an apparatus according to the invention that is not limiting as to the appended claims.

In the drawing:
- figure 1 schematically shows an evisceration apparatus according to the invention, wherein parts that do not contribute to the explanation of the invention are left out;
- figure 2 shows the apparatus of figure 1, without transport shackle for the entrails that are eviscerated;
- figures 3A and 3B show the two bracket halves of the evisceration tool of the evisceration apparatus in an open and closed position respectively;
- figures 4A and 4B show a transport shackle for a viscera package eviscerated from a poultry carcass;
- figures 5 and 6 show the initial step of moving the evisceration tool into the poultry body cavity;
- figures 7A and 7B show in isometric view and in cross-section the evisceration tool in its lowest position in the poultry body cavity wherein the tool is in its open position;
- figures 8A and 8B show in isometric view and in cross-section the evisceration tool in its lowest position in the poultry body cavity wherein the tool is moved to its closed position;
- figures 9A and 9B show in isometric view and in cross-section the evisceration tool moving upwards while the poultry's neck is clamped by a neck clamp;
- figures 10A and 10B show in isometric view and in cross-sectional view a first example of a viscera package of average dimensions taken out with the evisceration tool of the invention;

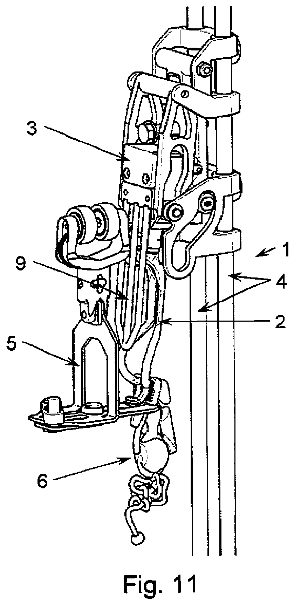

- figure 11 shows the action of taken over of the viscera package of figures 10A and 10B by a transport shackle;
- figures 12A and 12B show in isometric view and in cross-sectional view a second example of a viscera package of more than average dimensions taken out with the evisceration tool of the invention; and
- figure 13 shows the action of taken over of the viscera package of figures 12A and 12B by a transport shackle.

Whenever in the figures the same reference numerals are applied, these numerals refer to the same parts.

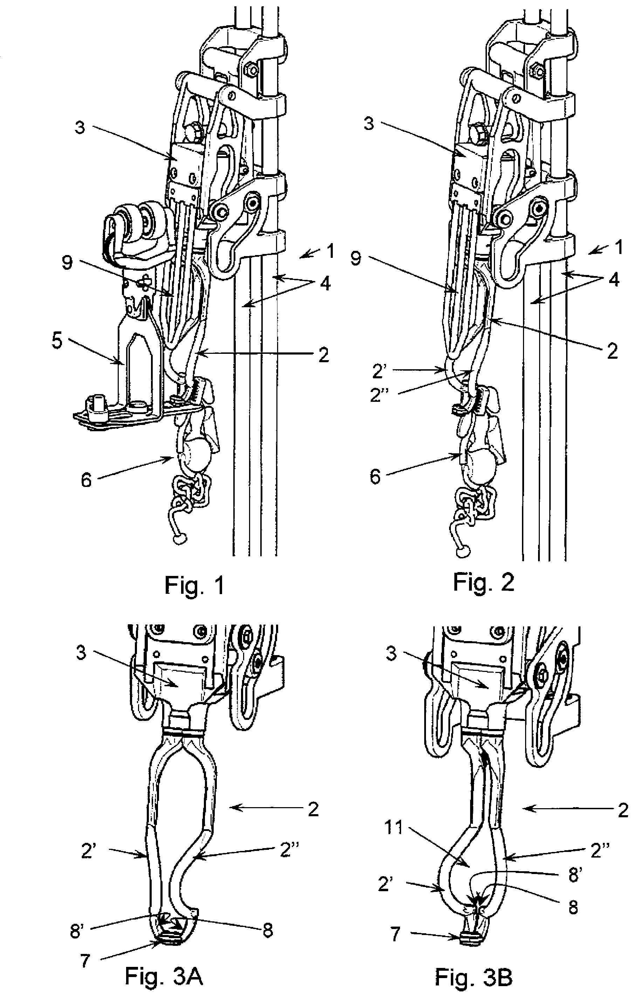

Figure 1 schematically shows an evisceration apparatus 1 according to the invention, together with a transport shackle 5 which is used for taking over and further conveying an entrails package or viscera 6 that is taken out of a poultry's body cavity. This will be further explained hereinafter. Such an evisceration apparatus 1 is preferably mounted on a carousel machine that is provided with multiple similar evisceration apparatuses. Since this is not essential to the invention this is not further shown in the drawing of the figures. In practice a processing line feeds a series of poultry carcasses to the carousel machine and the poultry carcasses are at a high rate eviscerated which is enabled by the multiple evisceration apparatuses of the carousel machine. In a manner known to the skilled person and therefore not shown in the drawing of the figures, each poultry carcass which is to be eviscerated is suspended by the legs while it is eviscerated.

The evisceration apparatus 1 comprises an evisceration tool 2 which is movable up and down, and into and out of a body cavity of the poultry as will be explained hereinafter. For moving the evisceration tool 2 up and down it is mounted on a carrier 3 that is slidable along rods 4. Other solutions are however also feasible and the shown construction is not essential to the invention.

The evisceration tool 2 comprises two bracket halves 2', 2" which can be better seen in figure 2, wherein for clarity the transport shackle is not shown.

Figure 3A and figure 3B show the two bracket halves 2', 2" that connect to each other with a hinge 7 at a lower extremity of the tool 2. The two bracket halves 2', 2" are embodied with cooperating clamping faces 8, 8' adjacent to and above said hinge 7 for clamping a part of the viscera 6 of the poultry when the two bracket halves 2', 2" are moved towards each other from an open position as shown in figure 3A into a closed position as shown in figure 3B. Figures 1 and 2 show the two bracket halves 2', 2" in the closed position of fig-ure 3B, wherein the evisceration tool 2 clamps and holds the viscera package 6.

Figure 3A and figure 3B further show that said two bracket halves 2', 2" are provided with curvatures that arrange that the two bracket halves delimit a window 11 immediately adjacent to the clamping faces 8', 8" of the two bracket halves 2', 2" when said bracket halves are in the closed position as shown in figure 3B, whereas said window immediately adjacent to the clamping faces 8', 8" is substantially closed or absent when the two brackets 2', 2" are in the open position as shown in figure 3A.

Particularly figure 1 and figure 2 further show an aspect of the invention relating to the feature that the evisceration tool 2 further comprises a support bracket 9 positioned next to the two bracket halves 2', 2". This support bracket 9 is movable up and down, and into and out of a poultry body cavity simultaneously and synchronously with the two bracket halves 2', 2". For that purpose it is preferable - although not essential - that the support bracket 9 is also mounted on the carrier 3 that is slidable along the rods 4. other constructions are however also feasible as long as it is secured that the support bracket 9 will move simultaneous and synchronous with the two bracket halves 2', 2" into and out of the poultry body cavity during evisceration.

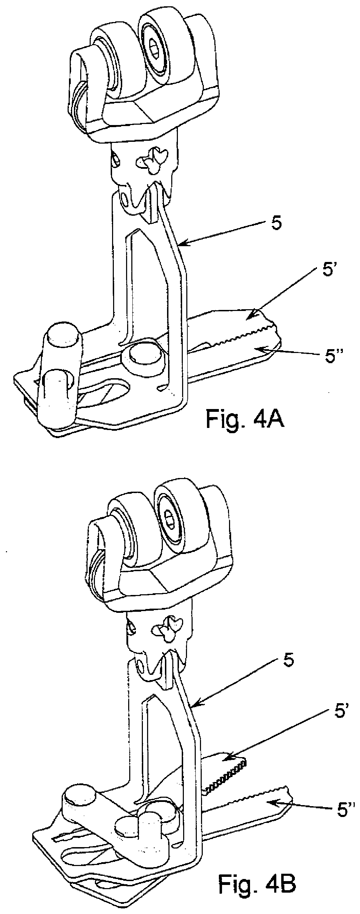

The support bracket 9 is thus arranged and maintained in a position to prevent that any part of the viscera package 6 will tip over in a undesired direction during or after removal of the viscera package 6 from the body cavity of the poultry so as to prevent that tissue of the viscera package 6 will eventually cover the hinge 7 at the lower extremity of the tool 2. The importance thereof resides in the ability of the evisceration tool 2 to cooperate with the transport shackle 5 which can move into the periphery of the carousel machine on which the evisceration tool 2 is mounted, so that the said transport shackle 5 can take over the entrails package 6 eviscerated from said body cavity of the poultry in a single action and convey it for further processing down the line. The said movement of the transport shackle 5 into the periphery of the carousel machine means that the support bracket 9 is then positioned between said transport shackle 5 and the two bracket halves 2', 2''. To enable that the transport shackle 5 can take over the viscera package 6 from the evisceration tool 2 in a single action, the transport shackle 5 is suitably equipped with jaws 5', 5" for clamping a part of the viscera or entrails package as is clearly shown in figures 4A and 4B.

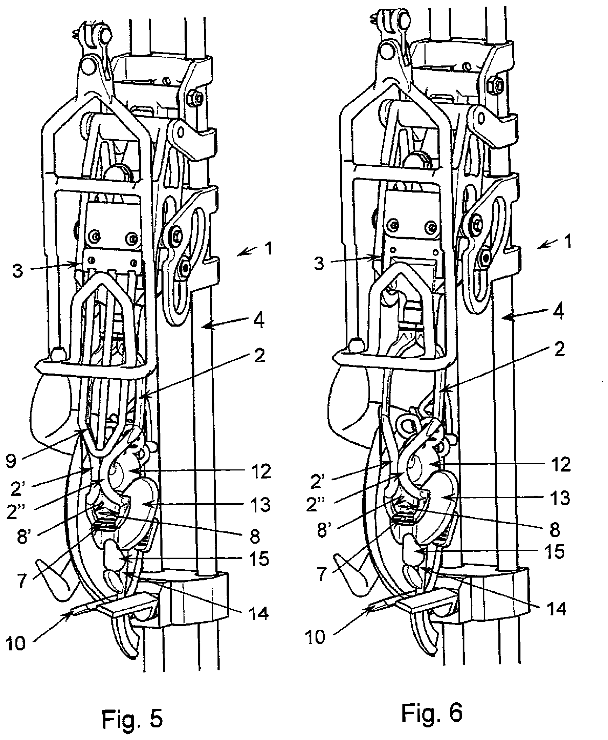

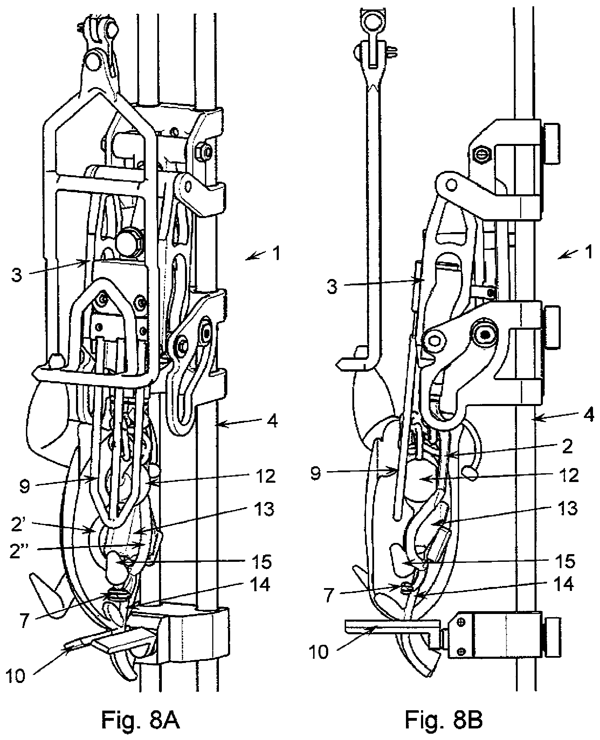

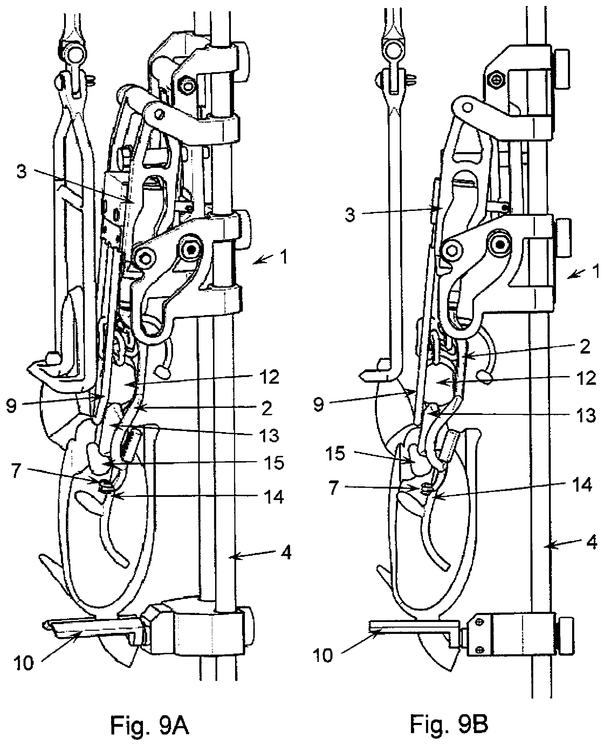

Turning now to figure 5 it is shown that the evisceration apparatus 1 can further comprise a neck clamp 10 for clamping a neck of the suspended poultry. In figure 5 the neck clamp 10 is open but it is closed during movement of the two bracket halves 2', 2" out of the body cavity of the poultry while clamping a part of the viscera 6 of the poultry as will be elucidated hereinafter with reference to figures 8 and 9. Otherwise figure 5 (and also figure 6 that depicts the apparatus of the invention without support bracket) shows the initial movement of the evisceration tool 2 into a poultry body cavity, wherein the two bracket halves 2', 2" are in their open position, and wherein the tool 2 passes the gizzard 12 and liver 13 at the breast side of the bird.

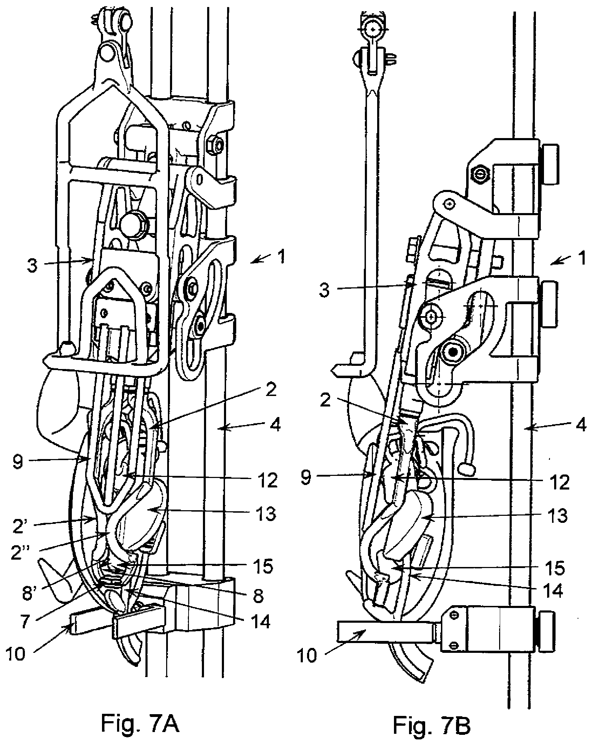

Figures 7A and 7B show that the evisceration tool 2 has reached its lowest position in the poultry body cavity, wherein the two bracket halves 2', 2" are still in their open position. For clarity also the relative position of the gizzard 12, the liver 13, and the gullet 14 which is to be clamped or pinched by the two bracket halves 2', 2" is shown.

In figure 8A and figure 8B it is shown that subsequently the neck clamp 10 is closed, and the gullet 14 is clamped by moving the two bracket halves 2', 2" into their closed position. The gizzard 12 is shown as being positioned between the evisceration tool 2 and the support bracket 9, wherein the support bracket 9 prevents that the viscera package 6 will tip over in an undesired direction which would result in that tissue of the viscera package 6 will cover the hinge 7 at the lower extremity of the tool 2. The support bracket 9 therefore prevents that such tissue can cover said hinge 7 which would stand in the way of the object to enable the transport shackle 5 to take over the viscera package 6 of the evisceration tool 2 in a single action.

Figure 9A and figure 9B show that the evisceration tool 2 and the support bracket 9 are moved out of the bird. This movement of the evisceration tool 2 and the support bracket 9 occurs simultaneously and synchronously and starts in their lowest position in the poultry body cavity shown in figure 8A and 8B. During this movement the gullet 14 is clamped between the two bracket halves 2', 2'' of the evisceration tool 2, and the neck of the poultry is clamped by the neck clamp 10. This simultaneous clamping of the gullet 14 and the neck of the poultry carcass promotes the effective separation of the viscera package 6 from the remainder of the poultry carcass. Because of the simultaneous and synchronous movement of the evisceration tool 2 and the support bracket 9, the support bracket 9 continuously and effectively avoids that any part of the viscera package 6 will tip over in an undesired direction which would result in that tissue would eventually cover the hinge 7 of the evisceration tool 2.

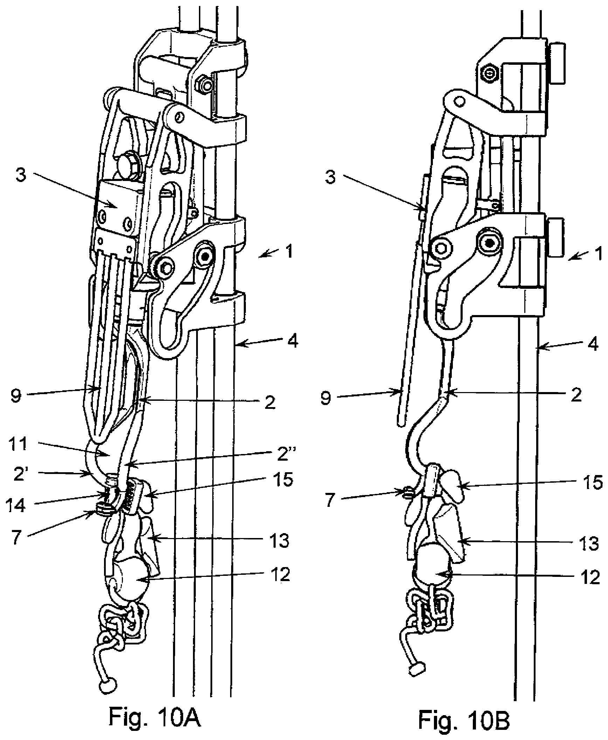

In figures 10A and 10B is shown that due to the feature that the two bracket halves 2', 2" are provided with curvatures that arrange that the two bracket halves delimit a window 11 when said bracket halves are in the closed position (as explained with reference to figure 3B), it is possible for the gizzard 12 and the other organs, such as the heart 15 and the liver 13, to move through said window 11 such that the viscera package 6 will be suspended from the evisceration tool 2 without any part of the viscera package 6 covering the hinge 7 of the evisceration tool 2. Accordingly it is possible for the transport shackle 5 which moves into the periphery of a carousel machine on which the evisceration tool 2 is mounted, to grip and take over the gullet 14 from the evisceration tool 2 in a single action.

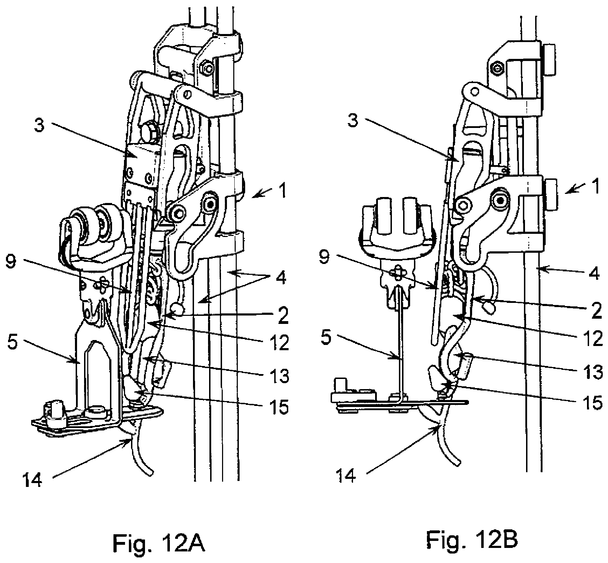

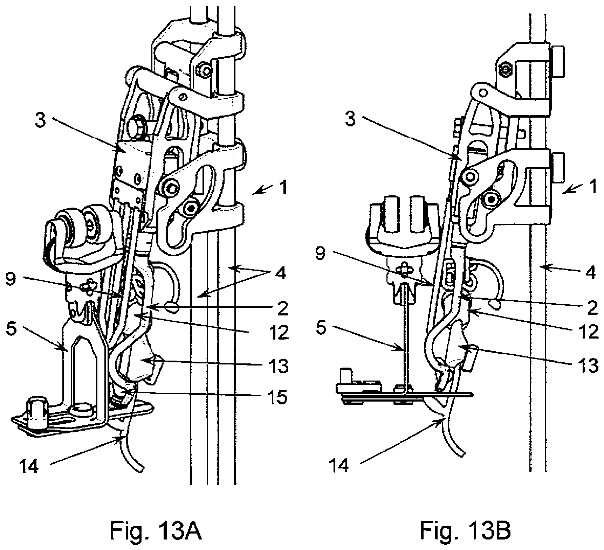

Figures 12A and 12B show an alternative situation in which the gizzard 12 has dimensions that prevent it to move through the central window 11 of the evisceration tool 2 when its two bracket halves 2', 2" are in the closed position. In that situation the original orientation of the viscera package 6 in the poultry body cavity is maintained also after its removal from the poultry body cavity. Figure 13 then shows that likewise it is possible for the transport shackle 5 which moves into the periphery of a carousel machine on which the evisceration tool 2 is mounted, to grip and take over the gullet 14 from the evisceration tool 2 without there being any tissue covering the hinge 7 of the two bracket halves 2', 2" which could form a hindrance for the transport shackle 5 to take over the viscera package 6.

Although the invention has been discussed in the foregoing with reference to an exemplary embodiment of the apparatus of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Evisceration apparatus (1) for eviscerating a poultry carcass suspended by the legs, wherein the apparatus (1) comprises an evisceration tool (2) which is movable up and down, and into and out of a body cavity of the poultry, and wherein the evisceration tool (2) comprises two bracket halves (2', 2") that connect to each other with a hinge (7) at a lower extremity of the tool (2), wherein said two bracket halves (2', 2") are embodied with cooperating clamping faces (8', 8") adjacent to and above said hinge (7) for clamping a part of the viscera (6) of the poultry when the two bracket halves (2', 2") are moved towards each other from an open position into a closed position, **characterized in that** the evisceration tool (2) further comprises a support bracket (9) positioned next to the two bracket halves (2', 2"), which support bracket (9) is movable up and down, and into and out of the body cavity of the poultry simultaneously and synchronously with the two bracket halves (2', 2") and **in that** the support bracket (9) is arranged to prevent that any part of the viscera package (6) will tip over during or after removal of the viscera package (6) from the body cavity of the poultry in a direction which would result **in that** tissue of the viscera package (6) will cover the hinge (7) of the tool (2)

2. Evisceration apparatus (1) according to claim 1, **characterized in that** it is arranged to cooperate with a transport shackle (5) for an entrails package (6) eviscerated from said body cavity of the poultry, wherein the support bracket (9) is positioned between said transport shackle (5) and the two bracket halves (2', 2").

3. Evisceration apparatus (1) according to claim 2 **characterized in that** the transport shackle (5) is equipped with jaws (5', 5") for clamping a part of the viscera or entrails package (6).

4. Evisceration apparatus (1) according to any one of claims 1 - 3, **characterized in that** the apparatus (1) further comprises a neck clamp (10) for clamping a neck of the suspended poultry during movement of the two bracket halves (2', 2") out of the body cavity of the poultry while clamping a part of the viscera (6) of the poultry.

5. Evisceration apparatus (1) according to any one of the preceding claims, and wherein said two bracket halves (2', 2") are provided with curvatures that arrange that the two bracket halves (2', 2") delimit a window (11) in one of the open and closed positions of the two bracket halves (2', 2"), **characterized in that** the curvatures are arranged such that the window (11) is present immediately adjacent to the clamping faces (8', 8") when the two bracket halves (2', 2") are in the closed position, whereas said window (11) immediately adjacent to the clamping faces (8', 8") is substantially closed or absent when the two brackets (2', 2") are in the open position.

6. Evisceration apparatus (1) according to any one of the previous claims, **characterized in that** the apparatus is mounted on a carousel machine.

7. Method for eviscerating poultry suspended by the legs, by:
using an evisceration tool (2) comprising two bracket halves (2', 2") that connect to each other with a hinge (7) at a lower extremity of the tool (2), wherein said two bracket halves (2', 2") are embodied with cooperating clamping faces (8', 8") adjacent to and above said hinge (7) for clamping a part of the viscera (6) of the poultry when the two bracket halves (2', 2") are moved towards each other from an open position into a closed position;
introducing the evisceration tool (2) in its open position into the body cavity of the poultry up to a lowermost position in the body cavity of the poultry;
moving the two bracket halves (2', 2") towards each other from the open position into a closed position therewith breaking tissue connections of the viscera with the remainder of the poultry carcass and eventually clamping a part of the viscera (6) of the poultry;
removing the two bracket halves (2', 2") in its closed position from the body cavity of the poultry carcass together with the clamped viscera (6), **characterized by**
providing the evisceration tool (2) with a support bracket (9) next to the two bracket halves (2', 2"), and moving said support bracket (9) up and down, and into and out of the body cavity of the poultry simultaneously and synchronously with the movement of the two bracket halves (2', 2") such that the support bracket (9) prevents that any part of the viscera package (6) will tip over during or after removal of the viscera package (6) from the body cavity of the poultry in a direction which would result in that tissue of the viscera package (6) will cover the hinge (7) of the tool (2).

8. Method for eviscerating poultry suspended by the legs according to claim 7, **characterized by** preventing with the support bracket (9) that any part of the viscera package (6) will tip over during or after removal of the viscera package (6) from the body cavity of the poultry in a direction that would result in that tissue of the viscera package (6) will cover the hinge (7) at the lower extremity of the tool (2).

9. Method for eviscerating poultry suspended by the legs according to claim 7 or 8, **characterized by** providing a transport shackle (5) for an entrails package (6) eviscerated from the body cavity of the poultry and positioning said transport shackle (5) such that the support bracket (9) is positioned between said transport shackle (5) and the two bracket halves (2', 2").

10. Method for eviscerating poultry according to any one of claims 7-9, **characterized by** fixing the neck of the poultry carcass in position during movement of the two bracket halves (2', 2") out of the body cavity of the poultry together with the clamped viscera.

11. Method for eviscerating poultry suspended by the legs according to any one of claims 7-10, **characterized by** mounting the evisceration tool (2) on a carousel machine.

## Patentansprüche

1. Ausweidungsvorrichtung (1) zum Ausweiden eines an den Beinen aufgehängten Geflügelkadavers, wobei die Vorrichtung (1) ein Ausweidungswerkzeug (2) umfasst, das auf und ab sowie in eine Körperhöhle
des Geflügels hinein und aus dieser heraus bewegbar ist, und
wobei das Ausweidungswerkzeug (2) zwei Halterungshälften (2', 2") umfasst, die an einem unteren Ende des Werkzeugs (2) über ein Scharnier (7) miteinander verbunden sind, wobei die beiden Halterungshälften (2', 2") mit zusammenwirkenden Klemmflächen (8', 8") versehen sind, die angrenzend an und oberhalb des Scharniers (7) angeordnet sind, zum Festklemmen eines Teils der Eingeweide (6) des Geflügels, wenn die beiden Halterungshälften (2', 2") aus einer offenen Position in eine geschlossene Position aufeinander zu bewegt werden,
**dadurch gekennzeichnet, dass** das Ausweidungswerkzeug (2) ferner eine Stützhalterung (9) aufweist, die neben den beiden Halterungshälften (2', 2") angeordnet ist, welche Stützhalterung (9) gleichzeitig und synchron mit den beiden Halterungshälften (2', 2") auf und ab sowie in die Körperhöhle des Geflügels hinein und aus dieser heraus bewegbar ist und dass die Stützhalterung (9) derart angeordnet ist, dass verhindert wird, dass irgendein Teil des Eingeweidepakets (6) während oder nach dem Entnehmen des Eingeweidepakets (6) aus der Körperhöhle des Geflügels in eine Richtung umkippt, die dazu führen würde, dass Gewebe des Eingeweidepakets (6) das Scharnier (7) des Werkzeugs (2) bedeckt.

2. Ausweidungsvorrichtung (1) gemäß Anspruch 1, **dadurch gekennzeichnet, dass** sie derart ausgestaltet ist, dass sie mit einem Transportbügel (5) für ein aus der genannten Körperhöhle des Geflügels ausgeweidetes Eingeweidepaket (6) zusammenwirkt, wobei die Stützhalterung 2
(9) zwischen dem Transportbügel (5) und den beiden Halterungshälften (2', 2") angeordnet ist.

3. Ausweidungsvorrichtung (1) gemäß Anspruch 2, **dadurch gekennzeichnet, dass** der Transportbügel (5) mit Klemmbacken (5', 5'') zum Festklemmen eines Teils der Eingeweide oder des Eingeweidepakets (6) ausgestattet ist.

4. Ausweidungsvorrichtung (1) gemäß einem der Ansprüche 1 - 3, **dadurch gekennzeichnet, dass** die Vorrichtung (1) ferner eine Halsklemme (10) zum Festklemmen eines Halses des aufgehängten Geflügels während der Bewegung der beiden Halterungshälften (2', 2") aus der Körperhöhle des Geflügels heraus umfasst, während ein Teil der Eingeweide (6) des Geflügels festgeklemmt wird.

5. Ausweidungsvorrichtung (1) gemäß einemder vorstehenden Ansprüche, wobei die beiden Halterungshälften (2', 2") mit Krümmungen versehen sind, die bewirken, dass die beiden Halterungshälften (2', 2") in einer der offenen und geschlossenen Positionen der beiden Halterungshälften (2', 2") ein Fenster (11) begrenzen, **dadurch gekennzeichnet, dass** die Krümmungen derart ausgebildet sind, dass das Fenster (11) unmittelbar an die Klemmflächen (8', 8") angrenzt, wenn sich die beiden Halterungshälften (2', 2") in der geschlossenen Position befinden, während das unmittelbar an die Klemmflächen (8', 8") angrenzende Fenster (11) im Wesentlichen geschlossen ist oder fehlt, wenn sich die beiden Halterungshälften (2', 2") in der geöffneten Position befinden.

6. Ausweidungsvorrichtung (1) gemäß einem der vorstehenden Ansprüche, **dadurch gekennzeichnet, dass** die Vorrichtung auf einer Karussellmaschine montiert ist.

7. Verfahren zum Ausweiden von an den Beinen aufgehängtem Geflügel durch:
Verwendung eines Ausweidungswerkzeugs (2), das zwei Halterungshälften (2', 2") umfasst, die an einem unteren Ende des Werkzeugs (2) über ein Scharnier (7) miteinander verbunden sind, wobei die beiden Halterungshälften (2', 2") mit zusammenwirkenden Klemmflächen (8', 8") versehen sind, die angrenzend an und oberhalb des Scharniers (7) angeordnet sind, zum Festklemmen eines Teils der Eingeweide (6) des Geflügels, wenn die beiden Halterungshälften (2', 2") aus einer offenen Position in eine geschlossene Position aufeinander zu bewegt werden;
Einführen des Ausweidungswerkzeugs (2) in seiner offenen Position in die Körperhöhle des Geflügels bis zu einer tiefsten Position in der Körperhöhle des Geflügels; Bewegen der beiden Halterungshälften (2', 2") aufeinander zu aus der offenen Position in eine geschlossene Position, wodurch Gewebeverbindungen der Eingeweide mit dem Rest des Geflügelkadavers durchtrennt werden und schließlich ein Teil der Eingeweide (6) des Geflügels festgeklemmt wird;
Entfernen der beiden Halterungshälften (2', 2") in ihrer geschlossenen Position aus der Körperhöhle des Geflügelkadavers zusammen mit den festgeklemmten Eingeweiden (6), **dadurch gekennzeichnet, dass** das Ausweidungswerkzeug (2) mit einer Stützhalterung (9) neben den beiden Halterungshälften (2', 2") versehen wird und die Stützhalterung (9) gleichzeitig und synchron mit der Bewegung der beiden Halterungshälften (2, 2") auf und ab sowie in die Körperhöhle des Geflügels hinein und aus dieser heraus bewegt wird, so dass die Stützhalterung (9) verhindert, dass irgendein Teil des Eingeweidepakets (6) 4
während oder nach dem Entnehmen des Eingeweidepakets (6) aus der Körperhöhle des Geflügels in eine Richtung umkippt, die dazu führen würde, dass Gewebe des Eingeweidepakets (6) das Scharnier (7) des Werkzeugs (2) bedeckt.

8. Verfahren zum Ausweiden von an den Beinen aufgehängtem Geflügel gemäß Anspruch 7, **dadurch gekennzeichnet, dass** mit der Stützhalterung (9) verhindert wird, dass irgendein Teil des Eingeweidepakets (6) während oder nach dem Entnehmen des Eingeweidepakets (6) aus der Körperhöhle des Geflügels in eine Richtung umkippt, die dazu führen würde, dass das Gewebe des Eingeweidepakets (6) das Scharnier (7) am unteren Ende des Werkzeugs (2) bedeckt.

9. Verfahren zum Ausweiden von an den Beinen aufgehängtem Geflügel gemäß Anspruch 7 oder 8, **dadurch gekennzeichnet, dass** ein Transportbügel (5) für ein Eingeweidepaket (6), das aus der Körperhöhle des Geflügels ausgeweidet wurde, vorgesehen wird und der Transportbügel (5) derart angeordnet wird, dass sich die Stützhalterung (9) zwischen dem Transportbügel (5) und den beiden Halterungshälften (2', 2") befindet.

10. Verfahren zum Ausweiden von Geflügel gemäß einem der Ansprüche 7 - 9, **gekennzeichnet durch** das Fixieren des Halses des Geflügelkadavers in Position während der Bewegung der beiden Halterungshälften (2', 2") aus der Körperhöhle des Geflügels heraus zusammen mit den festgeklemmten Eingeweiden.

11. Verfahren zum Ausweiden von an den Beinen aufgehängtem Geflügel gemäß einem der Ansprüche 7 - 10, **dadurch gekennzeichnet, dass** das Ausweidungswerkzeug (2) an einer Karussellmaschine angebracht wird.

## Revendications

1. Dispositif d'éviscération (1) destiné à éviscérer une carcasse de volaille suspendue par les pattes, le dispositif (1) comprenant un outil d'éviscération (2) déplaçable vers le haut et vers le bas, ainsi qu'à l'intérieur et à l'extérieur d'une cavité corporelle de la volaille, l'outil d'éviscération (2) comprenant deux demi-étriers (2', 2") reliées l'une à l'autre par une articulation (7) à une extrémité inférieure de l'outil (2), lesdites deux demi-étriers (2', 2") étant pourvues de surfaces de serrage coopérantes (8', 8") adjacentes à l'articulation (7) et situées au-dessus de celle-ci, pour serrer une partie des viscères (6) de la volaille lorsque les deux demi-étriers (2', 2") sont déplacées l'une vers l'autre depuis une position ouverte vers une position fermée,
**caractérisé en ce que** l'outil d'éviscération (2) comprend en outre un étrier de support (9) disposé à côté des deux demi-étriers (2', 2''), ledit étrier de support (9) étant déplaçable vers le haut et vers le bas, ainsi qu'à l'intérieur et à l'extérieur de la cavité corporelle de la volaille simultanément et de manière synchrone avec les deux demi-étriers (2', 2''), et **en ce que** le étrier de support (9) est agencé pour empêcher qu'une partie quelconque du paquet de viscères (6) ne bascule pendant ou après le retrait du paquet de viscères (6) hors de la cavité corporelle de la volaille dans une direction telle qu'un tissu du paquet de viscères (6) recouvre l'articulation (7) de l'outil (2).

2. Dispositif d'éviscération (1) selon la revendication 1, **caractérisé en ce qu'**il est conçu pour coopérer avec un étrier de transport (5) destiné à un paquet d'abats (6) retiré de ladite cavité corporelle de la volaille, le étrier de support (9) étant disposé entre ledit étrier de transport (5) et les deux demi-étriers (2', 2'').

3. Dispositif d'éviscération (1) selon la revendication 2, **caractérisé en ce que** l'étrier de transport (5) est équipé de mâchoires (5', 5") destinées à serrer une partie du paquet de viscères ou d'abats (6).

4. Dispositif d'éviscération (1) selon l'une quelconque des revendications 1 à 3, **caractérisé en ce que** le dispositif (1) comprend en outre un serre-cou (10) destiné à serrer le cou de la volaille suspendue pendant le déplacement des deux demi-étriers (2', 2") hors de la cavité corporelle de la volaille tout en maintenant serrée une partie des viscères (6) de la volaille.

5. Dispositif d'éviscération (1) selon l'une quelconque des revendications précédentes, lesdites deux demi-étriers (2', 2") présentant des courbures agencées de manière à ce que les deux demi-étriers (2', 2") délimitent une ouverture (11) dans l'une des positions ouverte et fermée des deux demi-étriers (2', 2''), **caractérisé en ce que** les courbures sont agencées de telle sorte que l'ouverture (11) est présente immédiatement au voisinage des surfaces de serrage (8', 8") lorsque les deux demi-étriers (2', 2") sont en position fermée, tandis que ladite ouverture (11), immédiatement adjacente aux surfaces de serrage (8', 8"), est sensiblement fermée ou absente lorsque les deux demi-étriers (2', 2") sont en position ouverte.

6. Dispositif d'éviscération (1) selon l'une quelconque des revendications précédentes, **caractérisé en ce que** le dispositif est monté sur une machine carrousel.

7. Procédé d'éviscération d'une volaille suspendue par les pattes, comprenant les étapes consistant à :
utiliser un outil d'éviscération (2) comprenant deux demi-étriers (2', 2") reliées l'une à l'autre par une articulation (7) à une extrémité inférieure de l'outil (2), lesdites deux demi-étriers (2', 2") étant pourvues de surfaces de serrage coopérantes (8', 8") adjacentes à l'articulation (7) et situées au-dessus de celle-ci, pour serrer une partie des viscères (6) de la volaille lorsque les deux demi-étriers (2', 2") sont déplacées l'une vers l'autre depuis une position ouverte vers une position fermée ;
introduire l'outil d'éviscération (2), dans sa position ouverte, dans la cavité corporelle de la volaille jusqu'à une position inférieure dans ladite cavité ;
déplacer les deux demi-étriers (2', 2") l'une vers l'autre depuis la position ouverte vers la position fermée, rompant ainsi les connexions tissulaires entre les viscères et le reste de la carcasse de volaille et serrant finalement une partie des viscères (6) ;
retirer les deux demi-étriers (2', 2") en position fermée de la cavité corporelle de la carcasse de volaille avec les viscères (6) serrés,
**caractérisé par** le fait de prévoir un étrier de support (9) à côté des deux demi-étriers (2', 2''), et de déplacer ledit étrier de support (9) vers le haut et vers le bas, ainsi qu'à l'intérieur et à l'extérieur de la cavité corporelle de la volaille simultanément et de manière synchrone avec le déplacement des deux demi-étriers (2', 2''), de telle sorte que le étrier de support (9) empêche qu'une partie quelconque du paquet de viscères (6) ne bascule pendant ou après le retrait du paquet de viscères (6) hors de la cavité corporelle de la volaille dans une direction telle qu'un tissu du paquet de viscères (6) recouvre l'articulation (7) de l'outil (2).

8. Procédé d'éviscération d'une volaille suspendue par les pattes selon la revendication 7, **caractérisé par** le fait d'empêcher, au moyen du étrier de support (9), qu'une partie quelconque du paquet de viscères (6) ne bascule pendant ou après le retrait du paquet de viscères (6) hors de la cavité corporelle de la volaille dans une direction telle qu'un tissu du paquet de viscères (6) recouvre l'articulation (7) située à l'extrémité inférieure de l'outil (2).

9. Procédé d'éviscération d'une volaille suspendue par les pattes selon la revendication 7 ou 8, **caractérisé par** le fait de prévoir un étrier de transport (5) destiné à un paquet d'abats (6) retiré de la cavité corporelle de la volaille, et de positionner ledit étrier de transport (5) de telle sorte que le étrier de support (9) soit disposé entre ledit étrier de transport (5) et les deux demi-étriers (2', 2'').

10. Procédé d'éviscération d'une volaille selon l'une quelconque des revendications 7 à 9, **caractérisé par** le fait de maintenir le cou de la carcasse de volaille en position pendant le déplacement des deux demi-étriers (2', 2") hors de la cavité corporelle de la volaille avec les viscères serrés.

11. Procédé d'éviscération d'une volaille suspendue par les pattes selon l'une quelconque des revendications 7 à 10, **caractérisé par** le fait de monter l'outil d'éviscération (2) sur une machine carrousel.
